# EUROPÄISCHE PATENTSCHRIFT

(11) **EP 0 681 734 B1**
(45) Veröffentlichungstag und Bekanntmachung des Hinweises auf die Patenterteilung: **02.04.1997**
(21) Anmeldenummer: 94904972.0
(22) Anmeldetag: 27.01.1994
(51) Int. Cl.: G21C 17/017

(54) **IM INNERN EINES ROHRES SELBSTTÄTIG FORTBEWEGBARES TRANSPORTMITTEL**
AUTOMATICALLY MOVABLE CONVEYOR DEVICE INSIDE A PIPE
ELEMENT DE TRANSPORT POUVANT AVANCER AUTOMATIQUEMENT A L'INTERIEUR D'UN TUYAU

(30) Priorität: 01.02.1993 DE 4302731
(43) Veröffentlichungstag der Anmeldung: 15.11.1995
(73) Patentinhaber: SIEMENS AKTIENGESELLSCHAFT, 80333 München (DE)
(72) Erfinder: RICHTER, Bernd, D-91056 Erlangen (DE)
(86) Internationale Anmeldenummer: DE9400071
(87) Internationale Veröffentlichungsnummer: WO9418679

(56) Entgegenhaltungen:
- EP-A- 0 061 078
- EP-A- 0 171 633
- EP-A- 0 324 644
- EP-A- 0 390 352
- EP-A- 0 484 701
- DE-A- 3 829 894

## Beschreibung

Die Erfindung bezieht sich auf ein im Innern eines Rohres selbsttätig fortbewegbares Transportmittel, wie es beispielsweise aus der EP-A-0 061 078 bekannt ist.

Zum ferngesteuerten Transportieren von Werkzeugen oder Prüfgeräten durch das Innere eines Rohres sind beispielsweise rad- oder kettengetriebene Transportmittel bekannt. Diese bekannten Transportmittel eignen sich jedoch nur für im wesentlichen horizontal verlegte Rohrleitungen. Auch ist deren Einsatz in gefluteten Rohrleitungen nur bedingt möglich.

Aus der EP-A-0 061 078 ist ein selbstfahrender Rohrmanipulator zum fernbedienten Transport von Werkzeugen oder Prüfgeräten bekannt, der aus einem zweigliedrigen Schreitwerk mit einem hinteren und einenm vorderen Schreitkörper besteht. Die beiden Schreitkörper sind gelenkig miteinander verbunden und können relativ zueinander in axialer Richtung verschoben werden. Die beiden Schreitkörper können abwechselnd im Rohr fixiert werden, so daß eine kriechende Vorwärtsbewegung des Manipulators im Rohr möglich ist. Zur Fixierung im Rohr enthalten die Schreitkörper jeweils zwei Stützflansche, auf denen jeweils mehrere Hydraulikzylinder angeordnet sind, deren Kolbenstangen radial ausgefahren werden können und auf diese Weise ein Verklemmen des Schreitkörpers im Rohr verursachen. Dadurch können auch vertikale Rohrabschnitte überwunden werden.

Bei diesem bekannten Manipulator muß jedoch die Position der Hydraulikzylinder auf den Stützflanschen jeweils an den Rohrinnendurchmesser angepaßt werden, da der Hub der radial ausfahrbaren Kolbenstangen durch den Radius des kleinsten befahrbaren Rohrdurchmessers begrenzt ist. Da außerdem eine auf Kugelrollen abgestützte Fortbewegung erfolgt, können Querschnittsveränderungen im Rohrverlauf praktisch nicht überwunden werden. Außerdem können mit dem bekannten Manipulator Rohrabschnitte mit Rohrabzweigen und Einmündungen nicht durchfahren werden.

Der Erfindung liegt nun die Aufgabe zugrunde, ein im Innern eines Rohres selbsttätig fortbewegbares Transportmittel anzugeben, das einen einfachen Aufbau hat und auch in Rohrabschnitten mit Querschnittsveränderungen und Hindernissen sowie Rohrabzweigen einsetzbar ist.

Die genannte Aufgabe wird gelöst durch ein Transportmittel mit den Merkmalen des Patentanspruches 1. Da die im Rohr unabhängig voneinander mechanisch verspannbaren Spanneinheiten jeweils eine Basis mit veränderbarer Länge umfassen, deren Enden mit mehreren Spannelementen miteinander derart verbunden sind, daß durch Verändern der Länge dieser Basis eine radiale Bewegung dieser Spannelemente herbeiführbar ist, wird eine axiale Verschiebung in einen radialen Hub umgewandelt, so daß mit ein und demselben Transportmittel Rohre mit großen Durchmesserunterschieden befahren werden können. Außerdem ist zum Verspannen der Spanneinheiten im Rohr nur eine axiale Bewegung erforderlich, die sich zwangsläufig auf alle Spannelemente überträgt. Dadurch wird der konstruktive Aufwand erheblich reduziert.

In einer vorteilhaften Ausgestaltung der Erfindung sind die Spanneinheiten derart relativ zueinander angeordnet, daß sich deren Basen räumlich überlagern. Durch diese Maßnahme wird eine kürzere Bauform ermöglicht, die eine Fortbewegung auch in Rohrabschnitten mit kleinen Krümmungsradien ermöglicht.

Als Spannelemente sind insbesondere Biegestäbe mit rechteckigem oder kreisrundem Profil, vorzugsweise Glasfaserstäbe geeignet. Die Spannelemente sind dabei vorzugsweise gelenkig mit den Enden der Basis verbunden.

Anstelle von Biegestäben können auch in einem Scheitelgelenk miteinander verbundene Gelenkarme vorgesehen sein, die ein mit dem Scheitelgelenk verbundenes Stützelement tragen.

Weitere vorteilhafte Ausgestaltungen der Erfindung ergeben sich gemäß der Unteransprüche.

Zur weiteren Erläuterung der Erfindung wird auf die Ausführungsbeispiele der Zeichnung verwiesen, in deren
Figur 1 ein Transportmittel gemäß der Erfindung in perspektivischer Darstellung veranschaulicht ist. In
Figuren 2 bis 7 ist anhand schematischer Darstellungen der Bewegungsablauf bei der Fortbewegung des in Figur 1 dargestellten Transportmittels erläutert.
Figur 8 zeigt eine vorteilhafte Ausführungsform der Erfindung in einem Längsschnitt und in
Figur 9 ist schematisch ein gelenkiges Spannelement veranschaulicht.

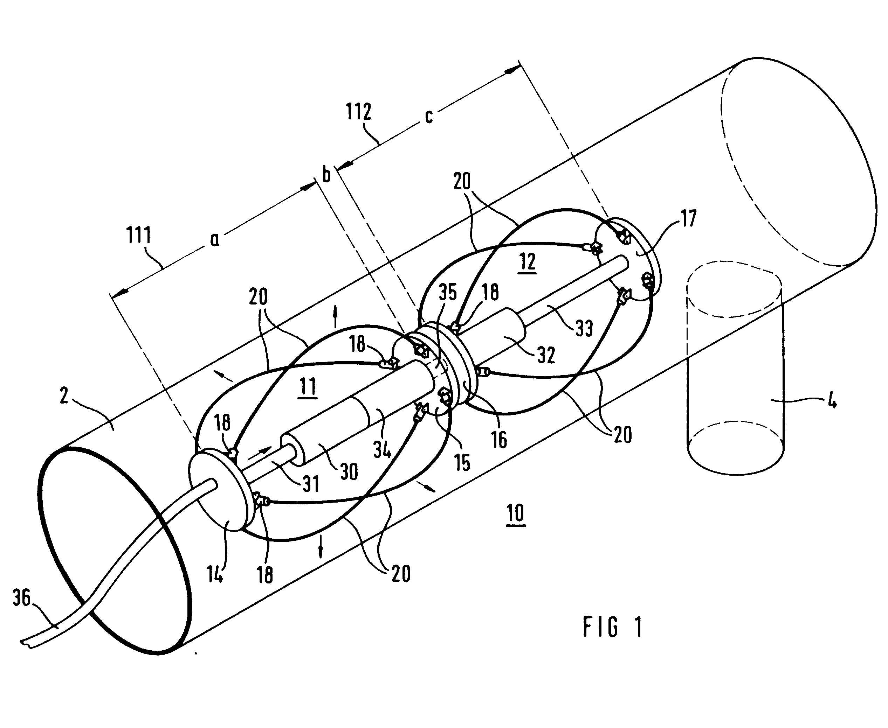

Entsprechend **Figur 1** ist in einem Rohr 2 mit einem Rohrabzweig 4 ein Transportmittel oder Schreitwerk 10 perspektivisch dargestellt. Das Schreitwerk 10 umfaßt zwei Spanneinheiten 11 und 12, die jeweils zwei zueinander axial verschiebbare Spannplatten 14, 15 bzw. 16, 17 enthalten. An den Spannplatten 14 bis 17 sind jeweils mehrere, im Beispiel der Figur vier Klemmeinrichtungen 18 angeordnet, in denen die Enden von bogenförmigen Spannelementen 20 fixiert sind. An der stirnseitigen Spannplatte 17 können in der Figur nicht dargestellte Geräteträger für Prüfgeräte oder Bearbeitungsvorrichtungen angeordnet sein. Als Spannelemente 20 sind vorzugsweise elastische Biegestäbe mit kreisförmigem oder rechteckigem Querschnitt vorgesehen. Insbesondere sind Glasfaserstäbe mit kreisförmigem Querschnitt geeignet. Durch die Spannplatten 14 und 15 und die Spannplatten 16 und 17 wird jeweils eine Basis 111 bzw. 112 gebildet, deren Länge a bzw. c den Biegezustand der ihr jeweils zugeordneten Spannelemente 20 festlegt.

Die als Spannelemente 20 vorzugsweise vorgesehenen Glasfaserstäbe sind zur Erhöhung des Reibwerts mit einem Gewebeschlauch, beispielsweise einem PVC-Gewebeschlauch, ummantelt. Durch Änderung des Schlauchwerkstoffes lassen sich dann verschiedene Reibwerte an den Rohrwandungen erreichen.

Zwischen der äußeren Spannplatte 14 und der der Spanneinheit 12 zugewandten inneren Spannplatte 15 der Spanneinheit 11 sind Linearantriebe, beispielsweise elektrische oder hydraulische Linearantriebe, vorzugsweise ein pneumatischer Spannzylinder 30 und ein pneumatischer Vorschubzylinder 34 angeordnet. Die Pneumatikzylinder 30 und 34 sind relativ zueinander und zur inneren Spannplatte 15 fixiert. Eine Kolbenstange 31 des Spannzylinders 30 wirkt auf die äußere Spannplatte 14, so daß durch eine Axialbewegung dieser Kolbenstange 31 der Abstand zwischen der äußeren Spannplatte 14 und der inneren Spannplatte 17, d.h. die Länge der durch die Spannplatten 14 und 15 gebildeten Basis a verändert werden kann. Eine Bewegung der Kolbenstange 31 in Richtung des parallel zu ihr eingezeichneten Pfeiles bewirkt eine Verkürzung dieser Basis 111 und somit eine ebenfalls durch Pfeile angedeutete nach außen gegen die Rohrinnenwand gerichtete Radialbewegung der Spannelemente 20. Die Klemmeinrichtungen 18 sind dabei vorzugsweise in einer senkrecht zur Längsachse und zur durch die Spannelemente 20 jeweils aufgespannten Ebene parallel verlaufenden Drehachse schwenkbar auf den Spannplatten angeordnet. Dadurch werden die beim Anpressen an die Innenwand des Rohres 2 auf die Spannelemente 20 wirkenden Kärfte von den Klemmeinrichtungen parallel zur Längsachse dieser Spannelemente 20 aufgenommen und ein Abknicken wird vermieden.

Die Kolbenstange 35 des an der inneren Spannplatte 15 befestigten Vorschubzylinders 34 ragt durch die innere Spannplatte 15 hindurch und ist kraftschlüssig mit der inneren Spannplatte 16 der Spanneinheit 12 verbunden. Durch eine Betätigung des Vorschubzylinders 34 kann somit der Abstand b zwischen den inneren Spannplatten 15 und 16 verändert werden. Die Kolbenstange 35 kann auch gelenkig mit der Spannplatte 16 verbunden sein, so daß die Spanneinheiten 11 und 12 gegeneinander geschwenkt und enge Rohrbögen leichter durchfahren werden können.

Die Spannplatten 16 und 17 der Spanneinheit 12 sind ebenfalls über einen Spannzylinder 32 und einer Kolbenstange 33 miteinander verbunden, so daß die Länge c einer zwischen der inneren Spannplatte 16 und der äußeren Spannplatte 17 gebildeten Basis 112 in gleicher Weise wie bei der Spanneinheit 11 verändert werden kann.

In der Figur ist außerdem noch eine Versorgungsleitung 36 angedeutet, die die zum Spannen und Entspannen der Spannzylinder 30 und 32 sowie des Vorschubzylinders 34 erforderlichen Pneumatikleitungen enthält.

Für Rohre 2 mit einem Durchmesser von etwa 600 mm bis 800 mm haben sich als geeignete Abmessungen für die Längen a, c der Basen 111 bzw. 112 etwa 900 mm und als maximaler Abstand b etwa 150 mm bis 200 mm ergeben. Die Durchmesser der Spannplatten 14 bis 17 betragen in dieser Ausführungsform etwa 200 mm. Als Spannelemente 20 sind in dieser Ausführungsform Glasfaserstäbe mit einem Durchmesser von etwa 9 mm geeignet.

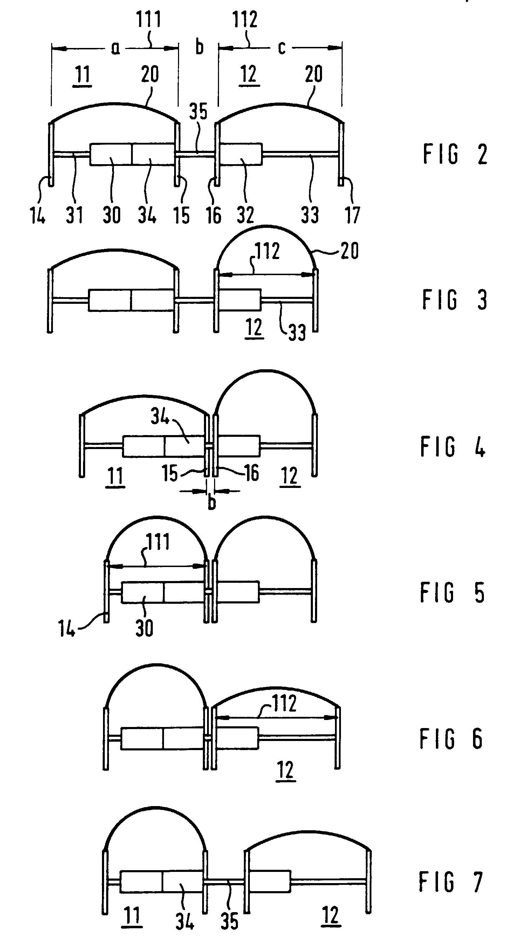

In **Figur 2** ist eine Situation dargestellt, in der die beiden Spanneinheiten 11 und 12 entspannt, d.h. die Kolbenstangen 31 und 33 maximal ausgefahren sind.

Durch Einfahren der Kolbenstange 33 und die dadurch bewirkte Verkürzung der Basis 112 der Spanneinheit 12 wird entsprechend **Figur 3** das Spannelement 20 nach außen gewölbt und gegen die in den Figuren nicht dargestellte Rohrinnenwand gepreßt. Dadurch ist die Spanneinheit 12 im Rohr verklemmt. Durch eine darauf erfolgende Verkürzung des Abstandes b zwischen den inneren Spannplatten 15 und 16 mit Hilfe des Vorschubzylinders 34 wird die Spanneinheit 11 gemäß **Figur 4** an die Spanneinheit 12 herangezogen.

Durch Druckbeaufschlagung des Spannzylinders 30 der Spanneinheit 11 wird in einem nächsten Schritt die äußere Spannplatte 14 an den Spannzylinder 30 herangezogen. Dies bewirkt eine Verkürzung der Basis 111 und in analoger Weise ein Verklemmen der Spanneinheit 11 im Rohr, so daß in diesem Bewegungsabschnitt entsprechend **Figur 5** beide Spanneinheiten im Rohr fixiert sind.

Gemäß **Figur 6** kann dann ausgehend von dieser Position die Spanneinheit 12 durch entsprechende Verlängerung ihrer Basis 112 entspannt und entsprechend **Figur 7** durch Ausfahren der Kolbenstange 35 des Vorschubzylinders 34 nach rechts verschoben werden. Ein darauf folgendes erneutes Spannen der Spanneinheit 12 und anschließendes Entspannen der Spanneinheit 11 führt dann zu einem Zustand entsprechend Figur 3, wobei sich jedoch inzwischen das gesamte Schreitwerk 10 nach rechts fortbewegt hat. Durch abwechselndes Spannen und Entspannen der Spannzylinder 30, 32 und des Vorschubzylinders 34 kann somit eine schreitende oder kriechende Vor- oder Rückwärtsbewegung erzeugt werden.

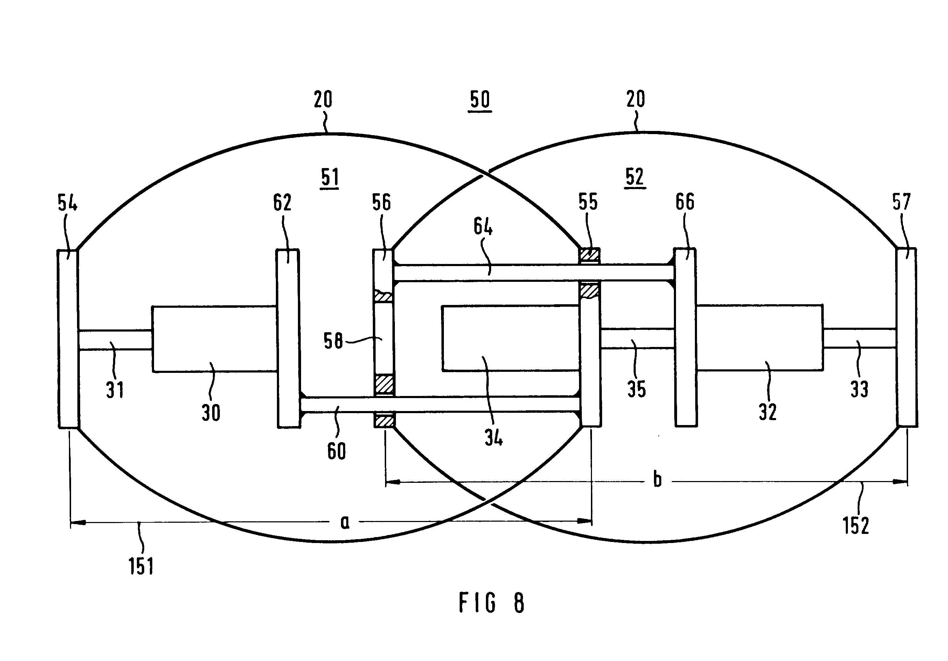

In der besonders bevorzugten Ausführungsform gemäß **Figur 8** ist ein Schreitwerk 50 vorgesehen, das zwei Spanneinheiten 51 und 52 enthält, deren Basen 151 bzw. 152 sich räumlich überlagern. In dieser Ausführungsform ist der Vorschubzylinder 34 von den Spannzylindern 30 und 32 räumlich getrennt und relativ zu diesen axial verschiebbar. Der Vorschubzylinder 34 ist hierzu an der inneren Spannplatte 55 der Spanneinheit 51 fixiert. Diese Spannplatte 55 ist über eine Befestigungsstange 60 mit einer Befestigungsplatte 62 starr verbunden, auf der der Spannzylinder 30 der Spanneinheit 51 fixiert ist. Die befestigungsstange 60 greift im Ausführungsbeispiel durch eine entsprechende Ausnehmung oder Bohrung der inneren Spannplatte 56 der Spanneinheit 52. Dadurch wird ein kompakter Aufbau ermöglicht. Die Spannplatte 56 ist ihrerseits ebenfalls über eine Befestigungsstange 64 mit einer Befestigungsplatte 66 verbunden, auf der der Spannzylinder 32 der Spanneinheit 52 montiert ist. Die Befestigungsstange 64 reicht hierzu durch eine Ausnehmung der inneren Spannplatte 55.

Der Vorschubzylinder 34 wirkt direkt sowohl auf die der Spanneinheit 51 zugeordnete Befestigungsplatte 62 als auch auf die der Spanneinheit 52 zugeordnete Befestigungsplatte 66. Je nachdem welche der beiden Spanneinheiten 51, 52 im Rohr verklemmt ist, bewirkt ein Ausfahren der Kolbenstange 35 des Vorschubzylinders 34 einen Vorschub der nicht verklemmten Spanneinheit 52 bzw. 51 nach rechts oder links. Bei beispielsweise verspannter Spanneinheit 51 würde ein Ausfahren der Kolbenstange 35 eine Bewegung der Spanneinheit 52 nach rechts verursachen. Um für den Vorschub einen möglichst hohen Hub gewährleisten zu können, ist die innere Spannplatte 56 der Vorschubeinheit 52 mit einer zentralen Öffnung 58 versehen, die ermöglicht, daß sich die innere Spannplatte 56 über den Vorschubzylinder 34 schieben kann.

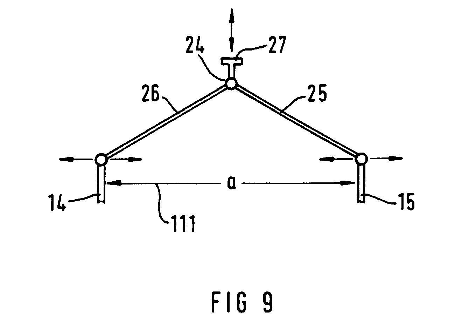

Gemäß **Figur 9** können anstelle von elastischen Biegestäben auch gelenkig in einem Scheitelgelenk 24 miteinander verbundene Gelenkarme 25 und 26 vorgesehen sein, die ihrerseits gelenkig an die Enden der jeweiligen Basis befestigt sind. In der Figur ist dies am Beispiel der von den Spannplatten 14 und 15 gebildeten Basis 111 der Spanneinheit 11 veranschaulicht. Auch in dieser Ausführungsform wird eine Veränderung der Länge der Basis 111 in eine dazu orthogonale Verschiebung des Scheitelgelenks 24 umgewandelt. Ein im Scheitelgelenk 24 angeordnetes und geeignet geformtes Stützelement 27 wird dann durch eine Verkürzung der Basis 111 nach außen gegen die Innenwand des in der Figur nicht dargestellten Rohres gedrückt.

## Patentansprüche

1. Im Inneren eines Rohres (2) selbsttätig fortbewegbares Transportmittel (10) mit wenigstens zwei gegeneinander verschiebbaren und unabhängig voneinander im Rohr (2) mechanisch verspannbaren Spanneinheiten (11, 12, 51, 52), die jeweils eine Basis (111, 112, 151, 152) mit veränderbarer Länge (a, c) umfassen, deren Enden über mehrere Spannelemente (20) miteinander derart verbunden sind, daß durch Verändern der Länge (a, c) dieser Basis (111, 112, 151, 152) eine radiale Bewegung dieser Spannelemente (20) herbeiführbar ist.

2. Transportmittel nach Anspruch 1, **dadurch gekennzeichnet**, daß die Spanneinheiten (51, 52) derart relativ zueinander angeordnet sind, daß sich deren Basen (151, 152) räumlich überlagern.

3. Transportmittel nach Anspruch 1 oder 2, **dadurch gekennzeichnet**, daß zum Vorschub und zum Spannen pneumatische Antriebseinheiten (30, 32, 34) vorgesehen sind.

4. Transportmittel nach einem der vorhergehenden Ansprüche, **dadurch gekennzeichnet,** daß die Spannelemente (20) gelenkig mit den Enden der jeweiligen Basis (111, 112, 151, 152) verbunden sind.

5. Transportmittel nach einem der vorhergehenden Ansprüche, **dadurch gekennzeichnet,** daß die Enden der Basen (a, c) jeweils durch eine Spannplatte (14, 15, 16, 17) gebildet werden, auf der die Enden der Spannelemente (20) fixiert sind.

6. Transportmittel nach Anspruch 5, **dadurch gekennzeichnet**, daß die Enden der Spannelemente (20) in Klemmeinrichtungen (18) fixiert sind, die jeweils um eine senkrecht zur radialen Bewegungsrichtung dieser Spannelemente (20) orientierte Achse schwenkbar auf den Spannplatten (14, 15, 16, 17) gelagert sind.

7. Transportmittel nach einem der vorhergehenden Ansprüche, **dadurch gekennzeichnet,** daß als Spannelemente (20) Glasfaserstäbe vorgesehen sind.

8. Transportmittel nach einem der vorhergehenden ANsprüche, **dadurch gekennzeichnet**, daß als Spannelemente (20) mit einem Ende in einem Scheitelgelenk (24) miteinander verbundene und mit dem jeweils an deren Ende gelenkig mit den Enden der Basis (111, 112) verbundene Gelenkarme (25, 26) vorgesehen sind.

## Claims

1. Transport means (10) being automatically moveable inside a pipe (2), having at least two clamping units (11, 12, 51, 52) which can be displaced against each other and can be mechanically braced independently of each other in the pipe (2), and which in each case comprise a base (111, 112, 151, 152) with variable length (a, c), the ends of which are connected to each other by way of several clamping elements (20) in such a way that by changing the length (a, c) of this base (111, 112, 151, 152) a radial movement of these clamping elements (20) can be brought about.

2. Transport means according to claim 1,
characterized in that the clamping units (51, 52) are arranged relative to each other in such a way that their bases (151, 152) are spatially superimposed on each other.

3. Transport means according to claim 1 or 2,
characterized in that pneumatic drive units (30, 32, 34) are provided for thrusting and clamping.

4. Transport means according to one of the preceding claims, characterized in that the clamping elements (20) are connected in an articulated manner to the ends of the respective base (111, 112, 151, 152).

5. Transport means according to one of the preceding claims, characterized in that the ends of the bases (a, c) are in each case formed by a clamping plate (14, 15, 16, 17) on which the ends of the clamping elements (20) are fixed.

6. Transport means according to claim 5, characterized in that the ends of the clamping elements (20) are fixed in clamping devices (18) which are each rotatably mounted on the clamping plates (14, 15, 16, 17) about an axis oriented perpendicular to the radial movement direction of these clamping elements (20).

7. Transport means according to one of the preceding claims, characterized in that fibre-glass rods are provided as clamping elements (20).

8. Transport means according to one of the preceding claims, characterized in that articulated arms (25, 26) are provided as clamping elements (20), the arms being connected to each other at one end in a crown hinge (24) and being connected in an articulated manner to the ends of the base (111, 112) at the respective other end.

## Revendications

1. Moyen de transport pouvant avancer automatiquement à l'intérieur d'un tuyau (2), comportant au moins deux unités (11, 12, 51, 52) de tension, qui peuvent être décalées l'une par rapport à l'autre, qui peuvent être tendues mécaniquement dans le tuyau (2) indépendamment les unes des autres et qui comportent chacune une base (111, l12, 151, 152) dont la longueur (a, c) peut être modifiée et dont les extrémités sont reliées entre elles par l'intermédiaire de plusieurs éléments (20) de tension de manière que, en modifiant la longueur (a, c) de cette base (111, 112, 151, 152) une mouvement radial de ces éléments (20) de tension peut être provoqué.

2. Moyen de transport suivant la revendication 1, caractérisé en ce que les unités (51, 52) de tension sont montées l'une par rapport à l'autre de manière que leurs bases (151, 152) se superposent dans l'espace.

3. Moyen de transport suivant la revendication 1 ou 2, caractérisé en ce que, pour l'avancement et pour la tension, il est prévu des unités (30, 32, 34) d'entraînement pneumatiques.

4. Moyen de transport suivant une des revendications précédentes, caractérisé en ce que les éléments (20) de tension sont articulés aux extrémités de la base (111, 112, 151, 152) associée.

5. Moyen de transport suivant une des revendications précédentes, caractérisé en ce que les extrémités des bases (a, c) sont formées chacune par une plaque (14, 15, 16, 17) de tension sur laquelle les extrémités des éléments (20) de tension sont immobilisées.

6. Moyen de transport suivant la revendication 5, caractérisé en ce que les extrémités des éléments (20) de tension sont immobilisés dans des dispositifs (18) de blocage qui sont montés chacun, sur les plaques (14, 15, 16, 17) de tension basculants par rapport à un axe dirigé perpendiculairement à la direction radiale du mouvement des éléments (20) de tension.

7. Moyen de transport suivant l'une des revendications précédentes, caractérisé en ce qu'il est prévu comme éléments (20) de tension des barreaux en fibre de verre.

8. Moyen de transport suivant l'une des revendications précédentes, caractérisé en ce qu'il est prévu comme éléments (20) de tension des bras (25, 26) articulés entre eux à une extrémité en une articulation (24) de sommet et articulés à l'autre extrémité aux extrémités des bases (111, 112).
